# NEUE EUROPÄISCHE PATENTSCHRIFT

(11) **EP 0 285 812 B2**
(45) Veröffentlichungstag und Bekanntmachung des Hinweises auf die Entscheidung über den Einspruch: **10.03.1999**
(45) Hinweis auf die Patenterteilung: 06.10.1993
(21) Anmeldenummer: 88103317.9
(22) Anmeldetag: 03.03.1988
(51) Int. Cl.: B01D 61/00, A61M 1/14

(54) **Mehrlagiger Hohlfadenwickelkörper**
Multiple layer hollow fibre assembly
Ensemble à couches multiples à fibres creuses

(30) Priorität: 10.03.1987 DE 3707584; 08.02.1988 DE 3803693
(43) Veröffentlichungstag der Anmeldung: 12.10.1988
(73) Patentinhaber: Akzo Nobel N.V., 6824 BM Arnhem (NL)
(72) Erfinder: Baurmeister, Ulrich, Dr. Dipl.-Ing., D-5600 Wuppertal 1 (DE)
(74) Vertreter: Heyn, Heliane

(56) Entgegenhaltungen:
- EP-A- 89 122
- WO-A-86/02914
- DD-B- 207 607
- DE-A- 2 721 444
- US-A- 4 140 637

## Beschreibung

Die Erfindung betrifft einen mehrlagigen Hohlfadenwickelkörper, bei welchem zumindest ein Teil der Hohlfäden wendelförmig und/oder ein Teil der Hohlfäden spiralförmig ausgebildet ist, die Hohlfäden innerhalb jeder Hohlfadenlage über ihre gesamte Länge in einem gegenseitigen seitlichen Abstand angeordnet sind, die Hohlfäden benachbarter aufeinanderfolgender Hohlfadenlagen sich kreuzen, die Hohlfäden in Form von wenigstens zwei Übereinandergelegten und dann spiralförmig aufgewickelten Hohlfadenmatten angeordnet sind, die Hohlfäden innerhalb jeder Hohlfadenmatte von mehreren, durch ein Web- oder Wirkverfahren eingebrachten Querfäden gehalten werden, wobei innerhalb jeder Hohlfadenmatte der gegenseitige Abstand der Querfäden größer ist als der gegenseitige Abstand der Hohlfäden, und keiner der Hohlfäden eine Umlenkstelle aufweist, ein Verfahren zum Herstellen des Hohlfadenwickelkörpers sowie die Verwendung des Hohlfadenwickelkörpers.

Es sind Hohlfadenwickelkörper bekannt, die durch Aufwickeln eines Hohlfadens zu einer Kreuzspule hergestellt werden. Diese Art der Herstellung ist sehr aufwendig und bietet nur begrenzte Ausgestaltungsmöglichkeiten der auf diese Weise herstellbaren Hohlfadenwickelkörper.

Es sind auch mehrlagige Hohlfadenwickelkörper aus einem spiralförmig aufgewickelten Gewebe oder Gewirke aus Hohlfäden bekannt. Bei dieser Art von Hohlfadenwickelkörpern kann es an den Überkreuzungspunkten zum Einknicken der Hohlfäden kommen. Zudem ist die Herstellung von Geweben und Gewirken aus Hohlfäden aufwendig.

Aus der EP-B1-0 093 677 ist ein mehrlagiger Hohlfadenwickelkörper bekannt, der dadurch hergestellt werden kann, daß mehrere Schichten von Übereinanderliegenden. sich überkreuzenden Hohlfäden spiralförmig aufgerollt werden. Die einzelnen Hohlfadenschichten dieses Wickelkörpers sind hernach also spiralförmig angeordnet, wobei die Hohlfäden nicht durch mehrere Querfäden gehalten sind. Durch das hierdurch bedingte Fehlen einer ausreichenden Quervermischung läßt der konvektive Wärme- bzw. Stofftransport im extrakapillären Raum bei diesem bekannten Hohlfadenwickelkörper sehr zu wünschen übrig. Außerdem hat sich in der Praxis gezeigt, daß die ursprünglich regelmäßige Anordnung der Hohlfäden bei der Weiterverarbeitung stark gestört wird, so daß sich im Hohlfadenwickelkörper durch das Verschieben und Aneinanderlegen von Hohlfäden Lücken bilden, die zur Kanalbildung führen. Das in dieser Patentschrift beschriebene Hersteilungsverfahren ist zudem sehr aufwendig und bietet nur beschränkte Ausgestaltungsmöglichkeiten für den Hohlfadenwickelkörper. Außerdem weisen einige der Hohlfäden bei diesem bekannten Hohlfadenwickelkörper Umlenkstellen auf, die durch die Umkehr der Changierbewegung beim Bewickeln der polygonalen Trommel mit Hohlfäden am Trommelende entstehen. Hierdurch können die Hohlfäden an den Umlenkstellen beschädigt werden, d.h. undicht werden oder sogar brechen.

Aus der DE-A-23 00 312 ist ein Hohlfadenwikkelkörper bekannt, bei dem auf einem Kern eine Mehrzahl von Schichten aus Hohlfäden übereinander angeordnet sind, wobei innerhalb jeder einzelnen Schicht einander benachbarte Hohlfäden im wesentlichen parallel zueinander verlaufen, während benachbarte Hohlfäden benachbarter aufeinanderfolgender Hohlfadenschichten sich jeweils unter einem Winkel kreuzen. Die Herstellung erfolgt durch Aufwickeln eines Hohlfadens auch über die Stirnflächen eines Kerns in mehreren Schichten, also nicht durch spiralförmiges Aufwickeln eines Hohlfadenflächengebildes. Diese Art der Herstellung eines Hohlfadenwickelkörpers ist sehr aufwendig und führt zu einem hohen Anteil an Abfall, da die auf den Stirnflächen des Kerns aufgewickelten Hohlfadenabschnitte verworfen werden müssen. Darüberhinaus führt das Fehlen von Querfäden od. dgl. nicht nur zu einer ungenügenden Quervermischung im extrakapillären Raum, sondern auch zu einem sehr ungeordneten Aufbau des Hohlfadenwickelkörpers, da die in der Regel sehr glatten Hohlfäden bereits während der Herstellung des Hohlfadenwickelkörpers verrutschen, was zu einem Aneinanderliegen einer sehr großen Anzahl von Hohlfäden oder Hohlfadenabschnitten führt, was einerseits Kanalbildung, andererseits das Abdecken eines großen Teils der für die Wärme- bzw. Stoffübertragung wirksamen Fläche zur Folge hat.

Aus der DD-C-233 946 ist ein Hohlfasermembranapparat bekannt, der durch Anfertigen von Bahnen paraller Hohlfasern, vorzugsweise durch Vernähen, Aufwickeln der Bahnen zu einem Faserbündel und Ausbilden von Anschlüssen hergestellt wird, indem das Faserbündel aus wenigstens zwei Bahnen gewickelt wird, wobei die Hohlfasern benachbarter Bahnen in einem Winkel von 10 ° bis 80 ° zueinander angeordnet werden, was vorzugsweise dadurch erreicht wird, daß die Bahnen von den Rändern aus schiefwinklig verzogen werden. Der seitliche Abstand der Nähte ist dabei relativ groß, so daß auch bei diesem bekannten Hohlfasermembranapparat benachbarte Hohlfasern nach dem Aufwickeln der Bahnen zu einem Faserbündel einander berühren, was zur Kanalbildung und Abdeckung von Membranfläche und demzufolge zu einer Verschlechterung der Wärme und/oder Stoffübertragung führt.

Ein spiralförmig ausgebildeter Hohlfadenwickelkörper ist schließlich aus WO 86/02914 bekannt.

Der vorliegenden Erfindung liegt daher die Aufgabe zugrunde, einen mehrlagigen Hohlfadenwikkelkörper der eingangs beschriebenen Art zur Verfügung zu stellen, dessen Hohlfäden über ihre gesamte Länge in einem gegenseitigen seitlichen Abstand angeordnet sind und der deshalb einen verbesserten konvektiven Wärme und/oder Stofftransport sowie eine erhöhte Wärme- und/oder Stoffübertragung gewährleistet, der größere Kombinations- und Ausgestaltungsmöglichkeiten hinsichtlich der Anordnung der Hohlfäden bietet und der auf einfache Weise herstellbar ist.

Diese Aufgabe wird durch einen Hohlfadenwikkelkörper gelöst, der die Merkmale des Anspruchs 1 aufweist.

Es wurde namlich gefunden, daß nur dann, wenn das Verhältnis von gegenseitigem seitlichen Abstand benachbarter Querfäden innerhalb jeder Hohlfadenmatte zu gegenseitigem seitlichen Abstand benachbarter Hohlfäden innerhalb jeder Hohlfadenmatte in dem erfindungsgemäßen Bereich liegt, ein Anliegen benachbarter Hohlfäden mit Sicherheit vermieden wird, die Zwischenräume zwischen benachbarten Querfäden und benachbarten Hohlfäden dabei jedoch ausreichend groß sind, um ein gutes Durchströmen des Hohlfadenwickelkörpers bei ausreichend niedrigem Druckverlust zu gewährleisten. Bekanntlich können Hohlfäden, die vor der Verarbeitung zu einer Hohlfadenmatte zu einer Spule aufgespult waren, wellenförmig ausgebildet sein. Derartige Hohlfäden neigen besonders stark zu gegenseitiger Berührung, wenn sie zu einer Hohlfadenmatte verarbeitet werden und der seitliche Abstand der Querfäden zu groß gewählt wird. Dieser Umstand wurde bisher offenbar nicht beachtet, weshalb bei bekannten Hohlfadenmatten bzw. Hohlfadenwickelkörpern aus derartigen Matten der seitliche gegenseitige Abstand der Querfäden verhältnismäßig groß gewährt wurde.

Unter gegenseitigem Abstand benachbarter Hohlfäden innerhalb jeder Hohlfadenmatte wird im Sinne der vorliegenden Erfindung der Abstand im unmittelbaren Bereich der Querfäden verstanden, da er in diesem Bereich im wesentlichen festgelegt ist.

Der gegenseitige seitliche Abstand benachbarter Querfäden bzw. benachbarter Hohlfäden braucht innerhalb einer Hohlfadenmatte nicht gleich zu sein, solange jedes Abstandsverhältnis im erfindungsgemäßen Bereich liegt. Auch brauchen die gegenseitigen Abstände benachbarter Querfäden bzw. Hohlfäden der verschiedenen den Hohlfadenwickelkörper bildenden Hohlfadenmatten nicht gleich zu sein, also einander entsprechen.

Zur Ermittlung des Abstandsverhältnisses wird der seitliche Abstand benachbarter Querfäden und benachbarter Hohlfäden natürlich in demselben Abschnitt der Hohlfadenmatte ermittelt. Die für eine Messung des Abstandsverhältnisses herangezogenen Querfäden und Hohlfäden bilden im wesentlichen ein Rechteck bzw. Parallelogramm und die seitlichen Abstände der Querfäden bzw. der Hohlfäden entsprechen den Abständen der gegenüberliegenden Seiten des von ihnen gebildeten Rechtecks bzw. Parallelogramms.

Der erfindungsgemäße Hohlfadenwickelkörper eignet sich zur Behandlung flüssiger, dampfförmiger und gasförmiger Medien.

Der erfindungsgemäße Hohlfadenwickelkörper kann einen mit Hohlfäden ausgefüllten Querschnitt oder einen ringförmigen Querschnitt mit einem zentralen axialen Strömungskanal oder einen ringförmigen Querschnitt mit einem den zentralen axialen Hohlraum ausfüllenden Kern (core) aufweisen. Dabei kann es sich um einen vollen Kern handeln, der den zentralen axialen Hohlraum völlig ausfüllt, oder aber um einen rohrförmigen, der den zentralen axialen Strömungskanal bildet. Der Hohlfadenwickelkörper kann im Querschnitt betrachtet auch flach ausgebildet sein. Ein solcher flacher Hohlfadenwickelkörper wird beispielsweise durch Aufwikkein von Hohlfadenmatten auf einen flach ausgebildeten (plattenförmigen) Kern erhalten. Der Querschnitt der Kerns hat dabei vorzugsweise die Form eines Rechtecks mit abgerundeten Ecken, eines Kreisabschnittes oder Halbkreises mit abgerundeten Kanten, einer Linse, einer Ellipse oder einer Sichel mit abgerundeten Kanten. Derartige Kernformen führen zu raumsparenden Hohlfadenwickelkörpem bzw. zu solchen, die beispielsweise der Körperoberfläche eines Patienten besser angepaßt sind, Bei rohrförmiger Ausgestaltung des Kerns, wobei dieser auch eine der zuvor genannten Querschnittsformen aufweisen kann, kann die Wand (der Mantel) des Kerns auch Durchbrüche aufweisen, um beispielsweise eine radiale Durchströmung des Hohlfadenwickelkörpers zu ermöglichen.

Wendelförmig bedeutet im Sinne der vorliegenden Erfindung "in Form einer in Bezug auf die Längsachse des Fadenwickelkörpers stellen Schraubenlinie, also in Form einer Schraubenlinie mit einem großen Steigungswinkel". Dies hat zur Folge, daß die Länge der so ausgebildeten Hohlfäden nicht wesentlich größer ist als die Länge des Hohlfadenwickelkörpers.

Spiralförmig bedeutet im Sinne der vorliegenden Erfindung "in Form einer in einer im wesentlichen senkrecht zur Längsachse des Fadenwickelkörpers liegenden Ebene angeordneten Spirale". Dies hat zur Folge, daß je nach der Anzahl der Hohlfadenlagen und der Hohlfadenschichten und je nach der Länge des Hohlfadenwickelkörpers die spiralförmig ausgebildeten Hohlfäden auch eine von der Länge des Hohlfadenwickelkörpers wesentlich abweichende Länge aufweisen können.

Die Begriffe Hohlfadenlage und Hohlfadenmatte sind wie folgt zu verstehen: Unter Hohlfadenmatte wird eine flächige einlagige Anordnung von Hohlfäden verstanden, bei welcher die Hohlfäden durch Querfäden gehalten werden. Unter Hohlfadenlage wird der bei der Herstellung des Hohlfadenwickelkörper pro volle Umdrehung desselben aufgewickelte Abschnitt einer Fadenmatte verstanden. Wickelt man also beispielsweise zwei Hohlfadenmatten auf einen Kern, indem man diesen zehn volle Umdrehungen ausführen läßt, so erhält man einen Hohlfadenwickelkörper, der insgesamt zweimal zehn, also zwanzig Hohlfadenlagen aufweist.

Unter Hohlfadenschicht wird eine aufgewicktelte Hohlfadenmatte verstanden.

Innerhalb einer Hohlfadenschicht bzw. -matte müssen die Hohlfäden nicht unbedingt parallel zueinander angeordnet sein, obwohl dies in der Regel die zweckmäßigste Ausgestaltungsform sein dürfte.

Die die Hohlfäden in gegenseitigem Abstand haltenden Querfäden werden durch ein Web- oder Wirkverfahren also beispielsweise als sogenannte Kett- oder Schußfäden eingebracht. Zur Verbesserung des konvektiven Wärme bzw. Stofftransports sind die Hohlfäden und/oder die Querfäden vorzugsweise strukturiert und/oder profiliert. Werden beispielsweise textile Multifilamentfäden verwendet, so sind diese vorzugsweise texturiert. Die Querfäden sollten vorzugsweise verhältnismäßig locker um die Hohlfäden geführt sein, um eine winkelsteife Verbindung bzw. ein Einschnüren der Hohlfäden durch die Querfäden zu vermeiden.

Die Hohlfäden benachbarter aufeinanderfolgender Lagen des Hohlfadenwickelkörpers können auch gleichmäßig wendelförmig ausgebildet sein, weisen dann aber eine unterschiedliche Länge auf, auf Grund der Bedingung, daß sie sich kreuzen. In der Regel sind die Hohlfäden benachbarter aufeinanderfolgender Lagen jedoch gegensinnig wendelförmig oder abwechselnd wendelförmig und spiralförmig oder abwechselnd wendelförmig und geradlinig (achsparallel) oder abwechelnd spiralförmig und geradlinig (achsparallel) ausgebildet. Jedoch können auch drei oder mehr Schichten unterschiedlich ausgebildeter Hohlfäden abwechelnd, d.h. in aufeinanderfolgenden Lagen angeordnet sein, also beispielsweise abwechselnd wendelförmig, spiralförmig und geradlinig ausgebildete Hohlfaden oder abwechselnd zwei Lagen gegensinnig wendelförmig ausgebildeter Hohlfäden und eine Lage spiralförmig oder geradlinig ausgebildeter Hohlfäden. In jedem Fall aber kreuzen sich nur solche Hohlfäden, die nicht derselben Hohlfadenschicht angehören.

Der Hohlfadenwickelkörper kann Hohlfäden, die sich zur Wärmeübertragung und/oder Hohlfäden, die sich zur Stoffübertragung, zum Stoffaustausch und/oder zur Stofltrennung eignen, aufweisen Hohlfäden, die sich hinsichtlich ihrer Eigenschaften und/oder ihrer Abmessungen und/oder ihrer Form unterscheiden, können auch zusammen in eine Hohlfadenwickelkörper angeordnet sein, so daß beispielsweise die Wärmeübertragung von einem Medium A auf ein Medium B durch hierfür geeignete Hohlfäden bewirkt werden kann, während gleichzeitig eine Stoffübertragung vom Medium B auf ein Medium C und/oder umgekehrt mit Hilfe hierfür geeigneter Hohlfäden stattfindet. Zur Stoffübertragung können auch mikroporöse Hohlfäden verwendet werden, Die Poren der Hohlfäden können zu diesem Zweck auch mit entsprechenden Substanzen gefüllt sein; auch kann das Hohlfadeninnere, also das Lumen, gefüllt sein

Die Hohlfäden des Wickelkörpers können sich auch hinsichtlich ihrer Stofftransporteigenschaften unterscheiden, also beispielsweise für unterschiedliche Stoffe unterschiedliche Selektivitäten oder Semipermeabilitäten, aufweisen, hydrophil oder hydrophob sein, porös oder porenfrei sein usw.

Unterschiede hinsichtlich der Form können beispielsweise darin bestehen, daß bei einem Teil der Hohlfäden die äußere Kontur, also der Umriß der Hohlfäden, im Querschnitt betrachtet im wesentlichen rund- bzw. kreisförmig ausgebildet ist und daß bei einem anderen Teil der Hohlfäden die äußere Kontur im Querschnitt betrachtet dreieckig, viereckig, dreilappig, vierlappig usw. ausgebildet ist.

Unterschiede können auch hinsichtlich der Hohlfadendurchmesser und der Hohlfadenlängen bestehen. Die Hohlfäden können auch unterschiedliche Lumenquerschnittsformen und/oder Wandstärken aufweisen.

Der Hohlfadenwickelkörper ist daher zur Herstellung beispielsweise von Filtern, Oxygenatoren, Hämofiltern, Blutplasmaseparatoren, IV-Filtern, Crossflow-Mikrofiltern, Gasseparatoren, Membrandestillationseinrichlungen, Bioreaktoren, Adsorbern, Absorbern, Desorbern, Dialysatoren, Austauscherkolonnen, Füllkörpern für Füllkörperkolonnen, Controlled-Release-Einrichtungen, Einrichtungen zur (kontrollierten) langsamen Abgabe von Wirkstoffen, Duftstoffen u. dgl., usw. geeignet. Zu diesem Zweck kann der Hohlfadenwickelkörper, wie dies auch für die bekannten Hohlfadenwickelkörper aus dem Stand der Technik bekannt ist. in ein entsprechendes Gehäuse eingesetzt werden, welches die erforderlichen Anschlüsse für das Zu- und Abführen der an der Wärme und/oder Stoffübertragung beteiligten Medien aufweist.

Die beiden Endbereiche der Hohlfäden des erfindungsgemäßen Hohlfadenwickelkörpers können - wie dies auch bei den aus dem Stand der Technik bekannten Hohlfadenwickelkörpern und Hohlfadenbündeln üblich ist - in eine aushärtbare Vergußmasse eingebettet oder eingeschleudert werden. Durch Entfernen eines ausreichend langen Abschnitts der ausgehärtelen Vergußmasse wird erreicht, daß die Hohlfäden mit ihren offenen Enden auf der Schnittfläche des dabei entstandenen sogenannten Rohrbodens münden. Der so ausgebildete Hohlfadenwickelkörpern kann dann ähnlich einer Filterpatrone in ein Gehäuse mit Fluidanschlüssen eingesetzt werden. Das Eingießen der Hohlfadenendbereiche kann aber auch erst nach dem Einbringen des Hohlfadenwickelkörpers in ein Gehäuse mit Fluidanschlüssen erfolgen, so daß die Vergußmasse selbst die fluiddichte Abdichtung mit dem Gehäuse bewirkt. Auch dies ist aus dem Stand dar Technik bekannt und braucht daher hier nicht weiter erläutert zu werden,

Bei Umströmung der Hohlfäden des Hohlfadanwickelkörpers in Längsrichtung desselben wird das betreffende Fluid häufig an einem Ende des Hohlfadenwickelkörpers im allgemeinen radial zugeführt und an seinem anderen Ende im allgemeinen auf der gegenüberliegenden Seite wieder radial abgeführt. Zur Vermeidung von Kanalbildung Innerhalb des Hohlfadenwickelkörpers ist daher eine gleichmäßige Beaufschlagung aller Hohlfäden auch bereits im Bereich der Mediumzuführung wichtig. Um dies zu erreichen, sind die Hohlfäden des Hohlfadenwickelkörpers mit Vorteil insbesondere im Bereich der Mediumzuführung in wenigstens einer Hohlfadenschicht in Gruppen angeordnet, wobei in diesem Bereich der Abstand der Hohlfäden voneinander innerhalb einer Gruppe kleiner ist als der Abstand der äußeren Fäden benachbarter Fadengruppen. Vorzugsweise werden die Hohlfäden jedoch quer - also im wesentlichen senkrecht zu ihren Längsachsen - umströmt.

Bei Verwendung des Hohlfadenwickelkörpers mit Hohlfäden beispielsweise zur Gastrennung, zur Blutplasmagewinnung, zur Hämofiltration, zur Dead-End-Filtration, zur Entlüftung einer Flüssigkeit u. dgl. können die Hohlfäden wenigstens einer Hohlfadenschicht an einem Ende der Fadenschicht verschlossen sein.

Zur Vergleichmäßigung der Umströmung der Hohlfäden des Hohlfadenwickelkörpers mit einem Fluid kann zwischen wenigstens einem Teil der Hohlfadenlagen des Hohlfadenwickelkörpers ein fluiddurchlässiges mehr oder weniger steifes oder elastisches Flächengebilde angeordnet sein. Die ses kann zusätzlich so ausgebildet sein, daß es Substanzen, die in dem die Hohlfäden umströmenden Fluid enthalten sind, durch Absorption oder Adsorption aus dem Fluid entfernt. Hierzu eignen sich beispielsweise Fasern aus aktivem Kohlenstoff o. dgl.

Zum Herstellen des mehrlagigen Hohlfadenwikkelkörpers werden erfindungsgemäß wenigstens zwei übereinandergelegte Hohlfadenmatten, bei denen die Hohlfäden innerhalb jeder Hohlfadenmatte über ihre gesamte Länge in einem gegenseitigen seitlichen Abstand angeordnet sind und von mehreren durch ein Web- oder Wirkverfahren angebrachten Querfäden gehalten werden, innerhalb jeder Hohlfadenmatte der gegenseitige Abstand der Querfäden größer ist als der gegenseitige Abstand der Hohlfäden, wobei das Verhältnis von gegenseitigem Abstand benachbarter Querfäden innerhalb jeder Hohlfadenmatte zu gegenseitigem Abstand benachbarter Hohlfäden innerhalb jeder Hohlfadenmatte im Bereich von 2 bis 40 liegt, und keiner der Hohlfäden eine Umlenkstelle aufweist, um eine Drehachse spiralförmig aufgewickelt, wobei die Hohlfäden benachbarter Hohlfadenmatten spätestens unmittelbar vor dem Aufwikkeln in eine sich überkreuzende Anordnung und zur Erzielung wendelförmig aufgewickelter Hohlfäden in Bezug auf die Drehachse des Hohlfadenwikkelkörpers in eine Schräglage gebracht werden, so daß sie mit der Drehachse einen Winkel bilden.

Zum Herstellen des Hohlfadenwickelkörpers können auch unterschiedliche Hohlfäden verwendet worden, wobei auch innerhalb wenigstens einer Hohlfadenmatte unterschiedliche Hohlfäden angeordnet sein können. Unterschiedlich bedeutet, wie oben bereits ausführlich dargelegt, unterschiedlich hinsichtlich ihrer Abmessungen, ihrer Form, ihres Werkstoffes, ihrer Eigenschaften, ihrer Funktion usw.

Zusammen mit den Hohlfadenmatten kann wenigstens ein fluiddurchlässiges Flächengebilde, also beispielsweise ein Vlies, ein Gewebe, ein Gewirke, ein Schaumstoff usw., aufgewickelt werden. Es können aber auch genauso viele, ggf. auch unterschiedliche, Flächengebilde wie Hohlfadenmatten aufgewickelt werden, so daß im fertigen Hohlfadenwickelkörper zwischen der Hohlfadenlage eine Lage fluiddurchlässiges Flächengebilde angeordnet ist. Dieses kann - wie oben bereits ausgeführt - ad - oder absorptive Eigenschaften aufweisen.

Die Hohlfadenmatten werden auf einer Webmaschine oder auf einer Wirkmaschine hergestellt, wobei die die Hohlfäden in einem gegenseitigen Abstand haltenden Querfäden als Schuß- bzw. als Kettfäden eingebracht werden können.

Die Verwendung von Kettfäden wird dabei bevorzugt, da hierbei die Verbindung zwischen den Querfäden und den Hohlfäden verhältnismäßig locker, d.h. nicht winkelsteif. ist, so daß die Winkellage der Hohlfäden und der Querfäden zueinander, also der Kreuzungswinkel zwischen beiden, leicht veränderbar ist. Dies ermöglicht eine äußerst vorteilhafte Herstellung des Hohlfadenwickelkörpers und vielfältiger Ausgestaltungsmöglichkeiten desselben selbst dann, wenn von einer Hohlfadenmatte ausgegangen wird, bei welcher sich die Hohlfäden und die Querfäden im wesentlichen rechtwinklig kreuzen und bei welcher die Längsachse jedes Hohlfadens zunächst im wesentlichen senkrecht zur Transportrichtung der Hohlfadenmatte vor dem Aufwickeln und parallel zur Drehachse des Hohlfadenwickelkörpers angeordnet ist, wie dies weiter unten noch ausführlicher beschrieben und erläutert wird.

Innerhalb der Hohlfadenmatten können auch Vollfäden und Hohlfäden, und zwar in regelmäßigen, aber auch in unregelmäßigen Abständen voneinander angeordnet sein, falls sich dies bei der Herstellung der Hohlfadenmatten oder des Hohlfadenwickelkörpers oder bei dessen Gebrauch als vorteilhaft erweisen sollte. Ein Teil der Vollfäden kann aber auch nur eine rein mechanische Funktion erfüllen, also beispielsweise dern Hohlfadenwickelkörper eine größere Formstabilität verleihen.

Zum Herstellen des Hohlfadenwickelkörpers wird für jede Schicht mit wendelförmig auszubildenden Hohlfäden in besonders vorteilhafter Weise von einer Hohlfadenmatte mit parallel zueinander angeordneten Hohlfäden ausgegangen, bei der die Längsaschse jedes Hohlfadens zunächst im wesentlichen senkrecht zur Transportrichtung der Hohlfadenmatte vor dem Aufwickeln ausgerichtet ist. Wird nun elne Seite der Hohlfadenmatte über eine längere Transportwegstrecke geführt als die andere Seite der Hohlfadenmatte, so eilen die Hohlfadenenden auf dieser einen Seite der Hohlfadenmatte den Fadenenden auf der anderen Seite der Hohlfadenmatte nach, was zur Folge hat, daß die Hohlfäden in Bezug auf ihre Ausgangslage in eine Schräglage gebracht werden, d.h. in Bezug auf die Transportrichtung einen Winkel bilden, der größer bzw. kleiner als 90° ist. Werden die Hohlfäden unmittelbar vor dem Aufwickeln auf diese Weise auch in Bezug auf die Drehachse des Hohlfadenwickelkörpers in eine Schräglage gebracht, so daß sie mit der Drehachse also einen Winkel bilden, so führt dies zwangsläufig zu einer wendelförmigen Ausbildung der betreffenden Hohlfäden beim Aufwickeln derselben z.B. auf einen Kern oder den im Entstehen befindlichen Hohlfadenwickelkörper. Beispielsweise kann jede dieser Hohlfadenmatten vor dem Aufwikkeln zunächst in einer zur Drehachse des Hohlfadenwickelkörpers parallelen Ebene transportiert werden, wobei die Transportrichtung jedoch parallel oder schräg, also nicht senkrecht, zur Drehachse des Hohlfadenwickelkörpers verläuft. Um den Transport der Hohlfadenmatte schließlich senkrecht auf die Drehachse des Hohlfadenwickelkörpers hin erfolgen zu lassen, muß die Hohlfadenmatte umgelenkt werden. Erfolgt die Umlenkung der Hohlfadenmatte vor dem Aufwickeln dabei in derselben Ebene derart, daß die Hohlfadenenden auf der einen Seite der Hohlfadenmatte einen Kreisbogen mit einem größeren Radius beschreiben als die Hohlfadenenden auf der anderen Seite der Hohlfadenmatte, so eilen die Hohlfadenenden auf dem größeren, d.h. längeren, Kreisbogen den Hohlfadenenden auf dem kleineren, d.h. kürzeren Kreisbogen nach, so daß die Hohlfäden auf diese Weise in eine Schräglage zur Drehachse des Hohlfadenwickelkörpers gebracht werden.

Eine weitere, besonders bevorzugte Herstellungsmethode besteht darin, jede für wendelförmig auszubildende Hohlfäden bestimmte Hohlfadenmatte zunächst mit parallel zueinander und zur Drehachse des Hohlfadenwickelkörpers ausgerichteten Hohlfäden senkrecht zu deren Längsachse und somit senkrecht zur Drehachse des Hohlfadenwickelkörpers in einer zu dieser parallelen Ebene auf die Drehachse zuzubewegen. Lenkt man eine Seite der Hohlfadenmatte dabei kurz vor dem Aufwickeln im wesentlichen senkrecht zu der Ebene aus, in welcher die Hohlfadenmatte an sich transportiert wird, beispielsweise durch eine Auslenkrolle, so ist der Transportweg der Hohlfadenenden, die über die Auslenkrolle laufen, größer als der der Hohlfadenenden auf der anderen Seite der Hohlfadenmatte, die die Transportebene nicht verlassen. Durch diese Auslenkung wird bewirkt, daß die ausgelenkten Hohlfadenenden den anderen Hohlfadenenden nacheilen, so daß die Hohlfäden in eine Schräglage, d.h. in eine nicht parallele Lage, in Bezug auf die Drehachse des Hohlfadenwickelkörpers gebracht werden.

Bei Hohlfadenmatten mit nicht parallel zueinander angeordneten Hohlfäden kann auf diese Weise erreicht werden, daß Hohlfäden nach dem Aufwikkeln im Hohlfadenwickelkörper eine unterschiedliche Ausbildung annehmen, also gleichsinnig aber unterschiedlich stark wendelförmig, gleichsinnig und/oder gegensinnig wendelförmig und geradlinig (achsparallel) oder gegensinnig wendelförmig ausgebildet sein können.

Die Hohlfäden bestehen vorzugsweise aus einem schmelzspinnbaren Polymeren oder regenerierter Cellulose, wobei für den Einsatz des Hohlfadenwickelkörpers im medizinischen Bereich die Hohlfäden bevorzugt aus einem biokompatiblen Werkstoff bestehen.

Die Querfäden bzw. die Vollfäden können ebenfalls aus einem Polymeren oder aus regenerierter Cellulose, aber z.B. auch ganz oder teilweise aus Aktivkohle bestehen. Auch kann die Oberfläche der Hohl-, Quer- oder Vollfäden mit Sorbentien belegt sein.

Die Erfindung wird nun anhand der Zeichnung näher erläutert. Es zeigt:
- Figur 1: eine Ausführungsform des Hohlfadenwickelkörpers im Querschnitt,
- Figur 2 bis 4: Ausgestaltungsformen des Hohlfadenwickelkörpers
- Figur 6: eine besondere Hohlfadenanordnung,
- Figur 7: in vereinfachter schematischer Darstellungsweise eine bevorzugte Ausführungsform des Verfahrens zum Herstellen des Hohlfadenwickelkörpers,
- Figur 8: in vereinfachter schematischer Darstellungsweise eine weitere Ausführungsform des Verfahrens zum Herstellen des Hohlfadenwickelkörpers,
- Figur 9: verschiedene Ausgestaltungsformen von zum Herstellen des Hohlfadenwickelkörpers geeigneten Hohlfadenmatten,
- Figur 10: eine Vorrichtung mit einer Ausführungsform des Hohlfadenwickelkörpers.
- Figur 11: erläutert die Bemessung des erfindungsgemäßen Bereiches.

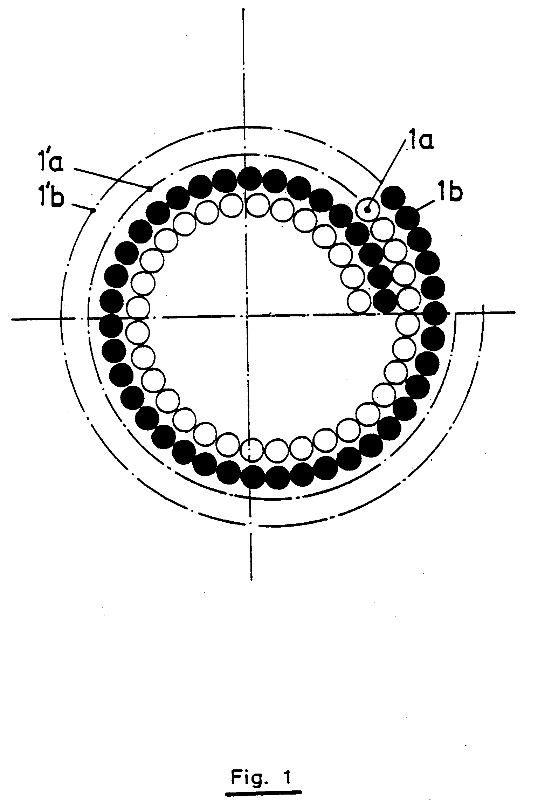

In Figur 1 ist in vereinfachter schematischer Darstellungsweise der Aufbau eines mehrlagigen Hohlfadenwickelkörpers, im Querschnitt betrachtet, dargestellt. Der Hohlfadenwickelkörper besteht hierbei aus insgesamt zwei spiralförmig aufgewikkelten Hohlfadenmatten 1a und 1b, wobei, wie durch die Linien 1'a und 1'b angedeutet, der Hohlfadenwickelkörper beliebig viele Hohlfadenlagen aufweisen kann. Zur Verdeutlichung des Aufbaus des Hohlfadenwickelkörpers sind die Hohlfäden 1b als schwarze Punkte gezeichnet. Die Hohlfäden 1a und 1b sind innerhalb der Schicht. der sie angehören, in einem gegenseitigen Abstand angeordnet und von Querfäden (nicht dargestellt) gehalten. Die Hohlfäden 1a und/oder 1b sind wendelförmig ausgebildet. Die Hohlfäden 1a oder 1b können jedoch auch geradlinig, also achsparallel, ausgebildet sein. In jedem Fall kreuzen die Hohlfäden 1a die Hohlfäden 1b.

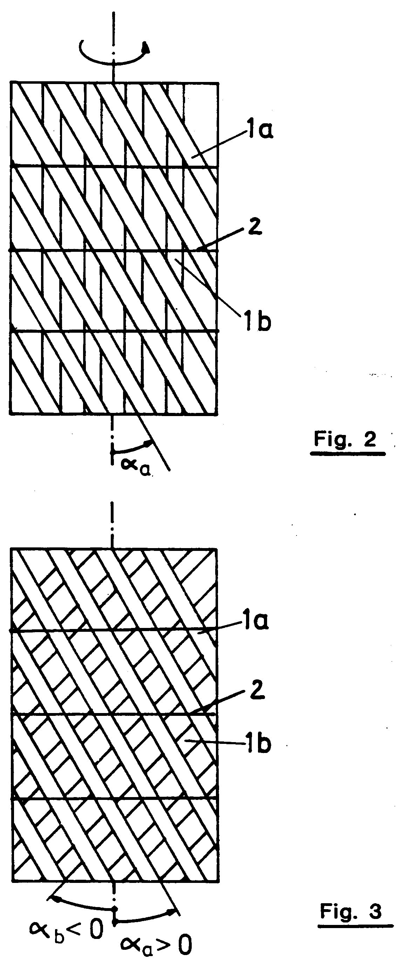

Bei der in Figur 2 dargestellten Ausführungsform des Hohlfadenwickelkörpers sind die Hohlfäden 1a wendelförmig ausgebildet, während die Hohlfäden 1b geradlinig ausgebildet und achsparallel angeordnet sind. Die Hohlfäden 1a bilden mit der Längsachse des Hohlfadenwickelkörpers den Winkel αₐ.

Bei der in Figur 3 dargestellten Ausführungsform des Hohlfadenwickelkörpers und sowohl die Hohlfäden 1a als auch die Hohlfäden 1b wendelförmig, jedoch gegensinnig wendelförmig, ausgebildet. Die Hohlfäden 1a bilden mit der Längsachse des Hohlfadenwickelkörpers den Winkel αₐ der im Sinne der hier vorliegenden Erfindung als größer als 0 definiert ist, während die Hohlfäden 1b mit der Längsachse des Hohlfadenwickelkörpers den Winkel α_{b} bilden, der definitionsgemäß kleiner als 0 ist, absolut betrachtet, jedoch genauso groß wie der Winkel αₐ, sein kann.

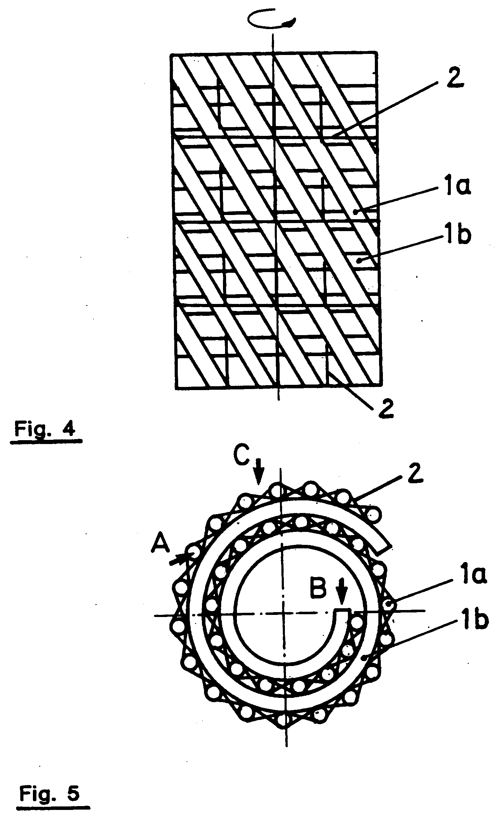

Bei der in Figur 4 dargestellten Ausführungsform des Hohlfadenwickelkörpers sind die Hohlfäden 1a wendelförmig und die Hohlfäden 1b spiralförmig ausgebildet. Der Aufbau des Hohlfadenwikkelkörpers und die Ausgestaltung der Hohlfäden 1 a und 1b dieser Ausführungsform wird in Figur 5 verdeutlicht, die den Hohlfadenwickelkörper gemäß Figur 4 im Querschnitt zeigt. Wie in Figur 5 darüberhinaus durch die Pfeile A, B und C veranschaulicht wird, kann ein in dieser Weise ausgestalteter Hohlfadenwickelkörper dazu verwendet werden, drei Medien gleichzeitig an einem Stoff- und/oder Wärmeaustausch teilnehmen zu lassen. Dabei strömt das Medium A durch die wendelförmig ausgebildeten Hohlfäden 1a, das Medium B durch die spiralförmig ausgebildeten Hohlfäden 1b und das Medium C um die Hohlfäden 1a und 1b, wobei dessen Strömungsrichtung im wesentlichen quer zur Längsachse des Hohlfadenwickelkörpers verläuft.

Bei den in den Figuren 2 bis 5 gezeigten Hohlfadenwickelkörpern sind die Querfäden mit der Positionszahl 2 gekennzeichnet.

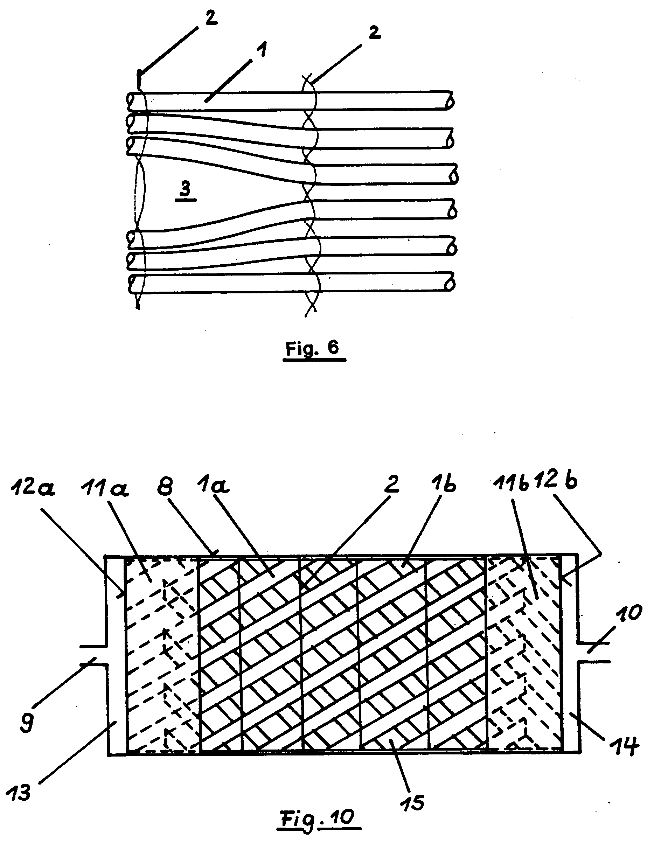

Bei der in Figur 6 dargestellten Hohlfadenmatte sind am linken Ende der Hohlfadenmatte jeweils drei Hohlfäden 1 durch besondere Anordnung der Querfäden 2 zu Gruppen zusämmengefaßt, wobei innerhalb jeder Gruppe der Abstand dar Hohlfäden 1 voneinander kleiner ist als der Abstand der äußeren Hohlfäden der beiden dargestellten benachbarten Hohlfadengruppen voneinander. Die durch diese Art der Anordnung der Hohlfadenenden gebildete Lücke 3 zwischen den Hohlfadengruppen gestattet ein besseres Eindringen das die Hohlfäden umströmenden Mediums in den Hohlfadenwickelkörper. Die weiter zur Mitte der Hohlfäden 1 eingebrachten Querfäden 2 sind so angeordnet, daß sie die Hohlfäden 1 in einem gegenseitigen im wesentlichen gleichen Abstand halten.

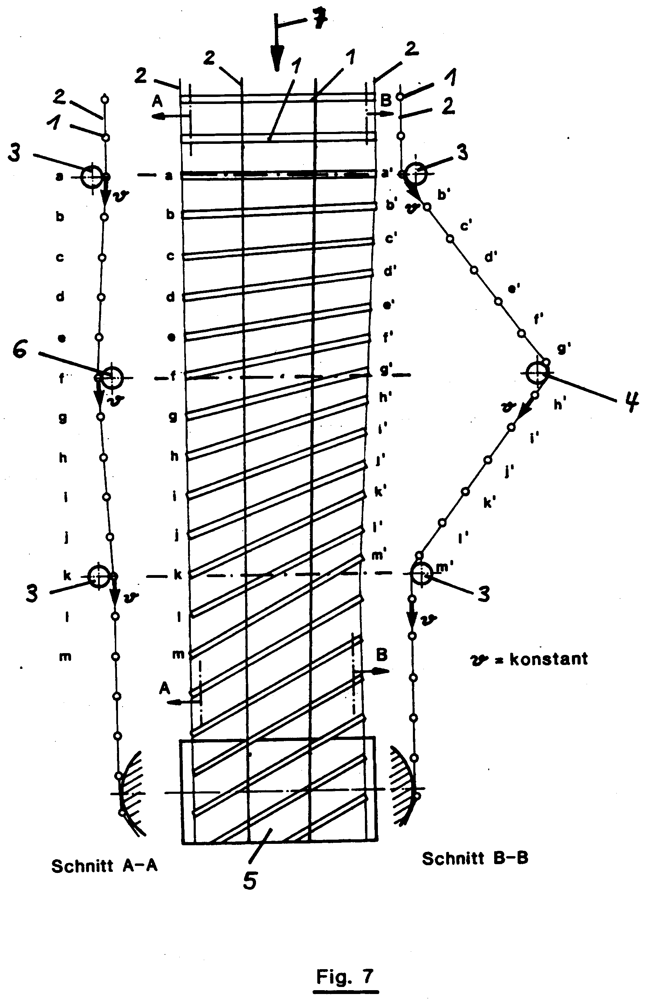

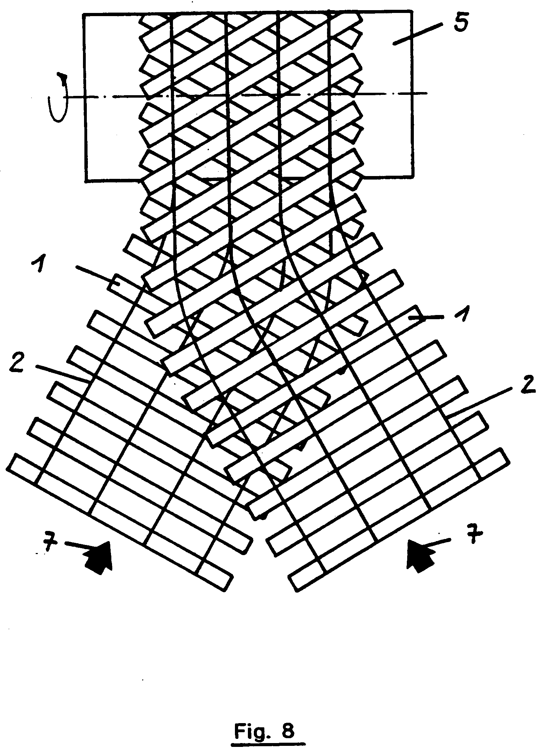

In Figur 7 ist eine besonders bevorzugte Ausführungsform des Verfahrens zum Herstellen des Hohlfadenwickelkörpers dargestellt. Die Wirkungsweise des Verfahrens wird durch den Schnitt A - A und B - B verdeutlicht, wobei ein Teil der Hohlfadenenden mit a, b usw. bis m und die anderen Enden der betreffenden Hohlfäden 1 mit a', b' usw. bis m' bezeichnet sind. Die jeweilige Lage der Hohlfadenenden ist sowohl in der Draufsicht als auch im Schnitt A - A und B - B zu sehen. Zur Vereinfachung ist nur eine Hohlfadenmatte dargestellt, die durch die Hohlfäden 1 und die Querfäden 2 gebildet wird und spiralförmlg zu dem Hohlfadenwickelkörper 5 aufgewickelt wird, in welchem die Hohlfäden 1 wendelförmig angeordnet sind. Die Hohlfäden 1 werden durch die Querfäden 2 in einem gegenseitigen Abstand gehalten. Zunächst sind die Hohlfäden 1 parallel zur Drehachse, d.h. Längsachse, des Hohlfadenwickelkörpers 5, also senkrecht zu der durch den Pfeil 7 angedeuteten Förderrichtung der Hohlfadenmatte, ausgerichtet. Die Hohlfadenmatte wird dabei über die Rollen 3, 4 und 6 mit gleichbleibender Geschwindigkeit auf die Drehachse bzw. den Hohlfadenwickelkörper 5 zubewegt. Während die Hohlfadenmatte an der Seite mit den Hohlfadenenden a bis m im wesentlichen keine nennenswerte Auslenkung auf ihrem Weg zur Drehachse bzw. zum Hohlfadenwickelkörper 5 erfährt, wird die Hohlfadenmatte an der Seite mit den Hohlfadenenden a' bis m' über die Auslenkrolle 4 geführt, wodurch die Hohlfadenenden a' bis m' eine längere Wegstrecke zurücklegen, als die Hohlfadenenden a bis m, diesen dadurch nacheilen und somit in eine nicht parallele Lage in Bezug auf die Drehachse (= Längsachse) des Hohlfadenwikkelkörpers 5 gebracht werden. Wie die Figur 7 weiter zeigt, wird durch die Schräglage der Hohlfäden 1 die Breite der Hohlfadenmatte geringfügig verringert. Die zuvor beschriebene Verfahrensweise wird erleichtert, wenn die Verbindung zwischen den Hohlfäden 1 und den Querfäden 2 eine Veränderung der Winkellage zueinander ohne Knicken der Hohlfäden an dieser Stelle gestartet, d.h. wenn diese Verbindung nicht winkelsteif ist. Dies gilt auch für das in Figur 8 dargestellte Verfahren. Wie der Figur 7 darüberhinaus entnommen werden kann, läßt sich die Schräglage der Hohlfäden 1 unmittelbar vor dem Aufwickeln durch das Maß der Auslenkung mit Hilfe der Auslenkrolle 4 beliebig variieren. Je stärker nämlich die Auslenkung ist, desto größer ist die Nacheilung der Hohlfadenenden a', b' usw. auf dieser Seite der Hohlfadenmatte und desto stärker ist die Schräglage der Hohlfäden 1, d.h. desto größer ist der Winkel, den die Hohlfäden 1 mit der Längsachse (Drehachse) des Hohlfadenwickelkörpers 5 bilden. Die Darstellung in Figur 7 zeigt außerdem, daß auch eine zu der dargestellten Schräglage der Hohlfäden 1 spiegelbildliche Schräglage der Hohlfäden 1 dadurch erreicht werden kann, daß die Umlenkrolle 6 in eine Position gebracht wird, die der dargestellten Position der Umlenkrolle 4 entspricht und umgekehrt. Hierdurch wird diejenige Seite der Hohlfadenmatte, an welcher sich die Hohlfadenenden a bis m befinden, ausgelenkt, nicht dagegen die Seite, an welcher sich die Hohlfadenenden a' bis m' befinden, so daß die Hohlfadenenden a. b usw. bis m gegenüber den Hohlfadenenden a', b' usw. bis m' eine Nacheilung erfahren.

Zur Herstellung eines Hohlfadenwickelkörpers mit in zwei spiralförmig aufgewickelten Hohlfadenmatten angeordneten gegensinnig wendelförmig ausgebildeten Hohlfäden kann somit beispielsweise von zwei Hohlfadenmatten ausgegangen werden, deren Hohlläden 1 zunächst wie in Figur 7 dargestellt, parallel zur Drehachse des Hohlfadenwickelkörpers 5 angeordnet sind und deren Hohlfäden 1 in eine entgegengesetzt verlaufende Schräglage dadurch gebracht werden, daß bei der einen Hohlfadenmatte die Seite mit den Hohlfadenenden a, b usw. und bei der anderen Hohlfadenmatte die Seite mit den Hohlfadenenden a', b' usw. ausgelenkt wird. Es ist bei dem geschilderten Beispiel jedoch auch möglich, die beiden Hohlfadenmatten auf derselben Seite, jedoch unterschiedlich stark auszulenken. Hierdurch wird erreicht, daß die Hohlfäden derjenigen Hohlfadenmatte, deren Seite stärker ausgelenkt wird, in eine stärkere Schräglage gebracht werden als die Hohlfäden der anderen Hohlfadenmatte und sich die Hohlfäden der beiden Hohlfadenmatten somit überkreuzen und im Hohlfadenwickelkörper gleichsinnig wendelförmig ausgebildet sind.

In Figur 8 ist in vereinfachter schematischer Darstellungsweise eine weitere Ausführungsform des Verfahrens dargestellt, bei welcher der Hohlfadenwickelkörper 5 mit in zwei spiralförmig angeordneten Schichten angeordneten gegensinnig wendelförmig ausgebildeten Hohlfäden 1 aus zwei Hohlfadenmatten hergestellt wird. Jede Hohlfadenmatte besteht aus den Hohlfäden 1 und den Querfäden 2 . Jede Hohlfadenmatte wird in einer zur Drehachse (Längsachse) des Hohlfadenwickelkörpers 5 parallelen Ebene transportiert, wobei die durch die Pfeile 7 angedeutete Transportrichtung zunächst schräg zur Drehachse des Hohlfadenwickelkörpers 5 verläuft. Unmittelbar vor dem Aufwickeln der Hohlfadenmatten werden diese umgelenkt, so daß der Transport der Hohlfadenmatten schließlich senkrecht auf die Drehachse des Hohlfadenwickelkörpers 5 hin erfolgt. Die Umlenkung der Hohlfadenmatten erfolgt in der jeweiligen Ebene derart, daß die Hohlfadenenden auf der einen Seite jeder Hohlfadenmatte einen größeren und damit längeren Kreisbogen beschreiben als die Hohlfadenenden auf der anderen Seite der Hohlfadenmatten. Die Hohlfadenenden, die den äußeren und damit längeren Kreisbogen beschreiben, eilen den Hohlfadenenden, die den inneren, also kürzeren Kreisbogen beschreiben, nach, so daß die Hohlfäden auf diese Weise in eine Schräglage zur Drehachse des Hohlfadenwickelkörpers 5 gebracht werden, und zwar ist die Schräglage der Hohlfäden dar einen Hohlfadenmatte derjenigen der Hohlfäden der anderen Hohlfadenmatte entgegengesetzt. Auch bei dieser Ausführungsform des Verfahrens kann durch die Stärke der Umlenkung der Hohlfadenmatten die Schräglage der Hohlfäden verändert werden und kann auch ein Hohlfadenwickelkörper mit sich kreuzenden jedoch gleichsinnig wendelförmig ausgebildeten Hohlfäden hergestellt werden.

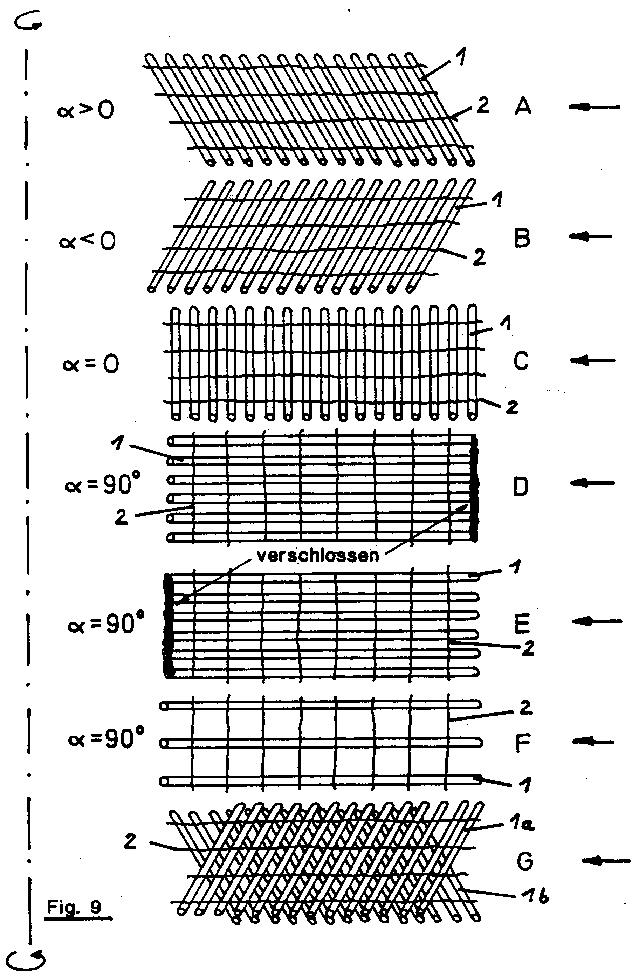

In Figur 9 sind unterschiedliche Ausführungsformen von Hohlfadenmatten A - F dargestellt, die erfindungsgemäß in beliebiger Anzahl, mindestens jedoch zwei, kombiniert werden können und zur Herstellung des Hohlfadenwickelkörpers spiralförmig aufgewickelte werden. Die Herstellung der dargestellten Hohlfadenmatten A - F kann mit den zuvor beschriebenen Verfahren aber auch mit den zum Stand der Technik gehörenden Verfahren erfolgen. Eine ausführliche Beschreibung dieser an sich bekannten Verfahren zum Herstellen von Hohlfadenmatten erscheint daher hier entbehrlich. Die Drehachse des Hohlfadenwickelkörpers muß man sich hierbei wie angedeutet in der Bildebene senkrecht verlaufend vorstellen, d.h. der Transport der Hohlfadenmatten erfolgt in der Bildebene waagerecht von rechts nach links auf die angedeutete Drehachse (Längsachse) des Hohlfadenwickelkörpers zu. Jede Hohlfadenmatte A - E besteht aus den Hohlfäden 1 und den Querfäden 2, mit denen sie den jeweils angegebenen Winkel bilden. Durch (gleichzeitiges) Aufwickeln der Hohlfadenmatten A und B ergeben sich (gegensinnig) wendelförmig ausgebildete Hohlfäden. Durch Aufwickeln der Hohlfadenmatte C ergeben sich geradlinig ausgebildete im wesentlichen parallel zur Längsachse des Hohlfadenwickelkörpers verlaufende Hohlfäden. Durch Aufwickeln der Hohlfadenmatten D bis F ergeben sich spiralförmig ausgebildete Hohlfäden, die in Ebenen angeordnet sind, die im wesentlichen senkrecht zur Längsachse des Hohlfadenwickelkörpers verlaufen. Bei den Hohlfadenmatten D und E handelt es sich um Hohlfadenmatten, bei denen die Hohlfäden 1 an einer Seite verschlossen sind. Das verschlossene Ende der Hohlfäden 1 kann am Außenumfang des Hohlfadenwickelkörpers oder im Innern desselben angeordnet sein.

Das Beispiel G in Figur 9 ergibt sich bei einer Kombination der Hohlfadenmatte A (Hohlfäden 1a) mit der Hohlfadenmatte B (Hohlfäden 1b). Wie nachfolgend gezeigt wird, gibt es im Rahmen der vorliegenden Erfindung eine Vielzahl von Kombinationsmöglichkeiten. wobei lediglich darauf zu achten ist, daß die Hohlfäden zweier benachbarter Hohlfadenmatten bzw. Hohlfadenschichten so anzuordnen sind, daß sie sich überkreuzen. Das Aufwikkeln beispielsweise von einer Hohlfadenmatte D und E oder F mit der dargestellten Anordnung der Hohlfäden 1 wäre demnach nicht erfindungsgemäß.

Die nachfolgend beispielshalber aufgezählten Kombinationen sind nur als Beispiele gedacht, nicht als Einschränkung.

Mögliche Kombinationen der in Figur 9 dargestellten Hohlfadenmatten A bis F:
A + B oder C oder D oder E oder F
A + B + C oder D oder E oder F
A + B + A + B (ggf. + A + B usw.)
A + B + C + A + B + c (ggf. + A + B + C usw.)
B + C oder D oder E oder F
C + D oder E oder F
C + D + C + E (ggf. + C + D + C + E usw.)

Der Vorteil der in den Figuren 7 und 8 dargestellten Ausführungsformen des Verfahrens zum Herstellen des Hohlfadenwickelkörpers besteht insbesondere darin, daß es hierbei möglich ist. Hohlfadenmatten unmittelbar nach ihrer Herstellung auf einer Web- oder Wirkmaschine zu Hohlfadenwickelkörpern zu verarbeiten, wobei die Ausbildung dar Hohlfäden des Hohlfadenwickelkörpers dabei auch schnell und auf einfache Weise ohne Unterbrechung des Verfahrens verändert werden kann.

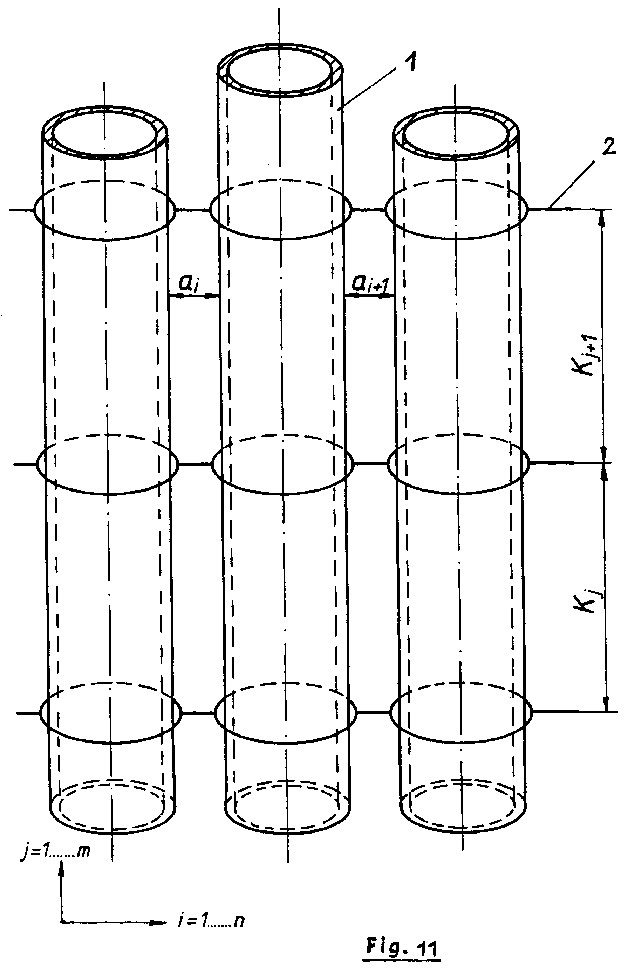

Figur 10 zeigt eine Vorrichtung, bei welcher ein Hohlfadenwickelkörper in dem Gehäuse 8 mit den Fluidanschlüssen 9 und 10 angeordnet ist. Der Hohlfadenwickelkörper weist die Hohlfäden 1a und 1b auf, deren Endbereiche in den Vergußmasseblöcken 11a bzw. 11b eingebettet sind, wobei die Vergußmasseblöcke 11a; 11b mit dem Gehäuse 8 fluiddicht verbunden sind. Dar Hohlfadenwickelkörper weist darüberhinaus die Querfäden 2 auf. Die Hohlfäden 1a; 1b sind porös, d.h. der Mantel (die Wand) der Hohlfäden 1a; 1b weist durchgehende nach innen und außen offene Poren auf, so daß ein Fluid oder auch nur ein ganz bestimmtes Fluid durch die Poren hindurchtreten kann. Die Endbereiche der Hohlfäden 1a; 1b sind so in die Vergußmasseblöcke 11a; 11b eingebettet, daß die Hohlfäden 1a an der Schnittfläche 12a des Vergußmasseblocks 11a enden und somit in die Kammer 13 münden, während ihre anderen Enden innerhalb des Vergußmasseblockes 11b eingebettet und somit verschlossen sind. Bei den Hohlfäden 1b ist es genau umgekehrt, d.h. die Hohlfäden 1b enden an der Schnittfläche 12b des Vergußmasseblocks 11b und münden somit in die Kammer 14, während ihre anderen Enden Innerhalb des Vergußmasseblocks 11a eingebettet und somit verschlossen sind. Diese Vorrichtung kann somit nach Art eines zweistufigen Dead-End-Filters (Kaskadenfilter) zum Filtrieren oder zu einer anderen Art der Stofftrennung verwendet werden. Die Poren der Hohlfäden 1a können zu diesem Zweck auch andere Porengrößen aufweisen als die Poren der Hohlfäden 1b. Eine Stofftrennung ist aber auch mit als nichtporös bezeichneten (sogenannten dichten) Hohlfadenmembranen möglich.

Läßt man ein Fluid beispielsweise durch den Fluidanschluß 9 in die Hohlfäden 1a strömen, so tritt das von irgendeinem Stoff ganz oder teilweise befreite Fluid, das sogenannte Filtrat oder Permeat, durch den Mantel (die Wand) der Hohlfäden 1a in den extrakapillären Raum 15 und von dort durch den Mantel (die Wand) der Hohlfäden 1b, von wo aus das nunmehr zweilach gefilterte Fluid durch die Kammer 14 und den Fluidanschluß 10 die Vorrichtung wieder verläßt, nachdem beim Durchtritt durch die Wand der Hohlfäden 1b eine weitere Stoffabtrennung erfolgt ist.

Der in Figur 10 dargestellte Hohlfadenwickelkörper ist beispielsweise dadurch erhältlich, daß man die Hohlfadenmatte(n) mit den Hohlfäden 1a und die Hohlfadenmatte (n) mit den Hohlfäden 1b seitlich versetzt zueinander aufwickelt, so daß die Enden der Hohlfäden 1a an der einen Seite und die Enden der Hohlfäden 1b an der anderen Seite des Hohlfadenwickelkörpers Überstehen. Nach dem Einbetten der Hohlfadenenden, beispielsweise in eine aushärtbare Vergußmasse, wird nach dem Aushärten der Vergußmasse nur soviel der beiden Vergußmasseblöcke entfernt, daß auf der einen Seite nur die Hohlfäden 1a und auf der anderen Seite nur die Hohlfäden 1b freigelegt werden, also an der Schnittfläche 12a bzw. 12b münden.

Bei der in Figur 10 dargestellten Ausführungsform des Hohlfadenwickelkörpers sind die Hohlfäden 1a wendelförmig und die Hohlfäden 1b im Vergleich zu diesen gegensinnig wendelförmig ausgebildet. Dies ist - wie sich aus dem oben Gesagten ergibt -jedoch nur eine der möglichen Ausgestaltungsformen der Hohlfäden auch für diese hier beschriebene Ausführungsform des Hohlfadenwickelkörpers.

In weiterer vorteilhafter Ausgestaltung kann der Hohlfadenwickelkörper gemäß Figur 10 auch noch Voll- oder Hohlfäden enthalten, die mit dem Fluid im extrakapilläran Raum in reaktive Wechselwirkung treten, also beispielsweise eine Stoffübertragung aus dem Fluid und/oder in das Fluid, eine chemische und/oder physikalische Veränderung des Fluids o.dgl. bewirken. So könnte beispielsweise durch poröse Hohlfäden 1a eine Blutplasmaseparation und im ektrakapillären Raum eine Plasmareinigung bewirkt werden, wobei das gereinigte Plasma anschließend durch poröse Hohtfäden 1b wieder abgeführt werden kann. Bei den eine Reaktion mit dem Fluid im extrakapillären Raum bewirkendan Fäden kann es sich aber beispielsweise auch um Hohlfäden handeln, deren beide Enden verschlossen sind. z.B. durch die Vergußmasseblöcke, und die mit einer entsprechenden Substanz gefüllt sind.

Figur 11 dient zur Verdeutlichung der Methode zur Bemessung bzw. Bestimmung des erfindungsgemäßen Verhältnisses von gegenseitigem Abstand benachbarter Querfäden 2 innerhalb jeder Hohlfadanmatte zu gegenseitigem Abstand benachbarter Hohlfäden 1 innerhalb jeder Hohlfadenmatte. Der gegenseitige Abstand benachbarter Querfäden 2 ist mit Kⱼ, derjenige benachbarter Hohlfäden 1 mit aᵢ bezeichnet. Der jeweils benachbarte Abstand trägt den Index j + 1 bzw. i + 1 usw. bis j + m bzw. i + n. Die gegenseitigen Abstände der Querfäden 2 bzw. der Hohlfäden 1 untereinander brauchen nicht gleich zu sein, d.h. Kⱼ braucht nicht gleich K_{j+ 1} usw. und aᵢ braucht nicht gleich a_{i+ 1} usw. zu sein. Für die Bestimmung des Abstandsverhältnisses werden jedoch die jeweils zusammengehörenden Abstände herangezogen. So sind der Abstand der Querfäden 2 K_{j+ 1} und der gegenseitige Abstand der Hohlfäden 1 im Bereich der Querfäden 2 an dieser Stelle also a_{i+ 1} für die Berechnung maßgebend.

Bei der in Figur 11 dargestellten Konfiguration bilden die Querfäden 2 und die Hohlfäden 1 an der Stelle ihres geringsten gegenseitigen Abstandes ein Rechteck, dessen kürzere Seite a_{i+ 1} und dessen längere Sehe K_{j+ 1} lang ist. Das Abstandsverhältnis entspricht hierbei also dem Verhaltnis der Seitenlängen des jeweiligen durch die Querfäden 2 und die Hohlfäden 1 gebildeten Rechtecks. Je nach Ausgestaltung, Wellung, Kräuselung usw. der Hohlfäden 1 ist der Abstandsbereich unterschiedlich zu bemessen, was durch einfache Versuche möglich ist. Bei richtiger Bemessung innerhalb des erfindungsgemäßen Bereichs wird bei den üblichen zur Wärme- und/oder Stoffübertragung geeigneten Hohlfäden eine gegenseitige Berührung der Hohlfäden mit Sicherheit vermieden.

Die Verarbeitung des Hohlfadenwickelkörpers zu einer gebrauchsfähigen Einheit, bei welcher die Hohlfadenenden in einem Vergußmasseblock eingebettet sind, kann dadurch erleichtert werden, daß die offenen Enden der Hohlfäden bereits beim Aufwickeln der Hohlfadenmatten verschlossen werden. Dies kann beispielsweise durch Verschweißen, Verkleben, insbesondere aber durch Verquetschen erfolgen. Um diese zuletzt genannte Art des Verschließens der Hohlfadenenden zu erreichen, werden die Enden der Hohlfäden der Hohlfadenmatten vor dem Aufwickeln durch Quetschwalzen geführt, die die Hohlfadenenden flachdrücken und dabei so stark zusammenpressen, daß eine bleibende Verformung oder gar Verschweißung des Mantels der Hohlfäden in diesem Bereich und damit ein Verschluß der Hohlfadenenden erreicht wird. Auch können die Hohlfadenenden durch Abbinden mit Hilfe von in diesem Bereich speziell eingebrachten Kettfäden verschlossen (zugeschnürt werden.

Hierdurch wird beim Einbetten oder Einschleudern der Hohlfadenenden in eine aushärtbare Vergußmasse, wie beispielsweise Polyurethan. Silikon o. dgl., ein Eintreten der Vergußmasse in das Hohlfadeninnere (Lumen) verhindert, während das Eindringen der Vergußmasse zwischen die Hohlfäden, also in den extrakapillären Raum, begünstigt wird. Darüberhinaus kann das vor dem Einbetten bzw. Einschleudern der Hohlfadenenden in eine Vergußmasse üblicherweise notwendige Verschließen der Hohlfadenenden, beispielsweise durch Wachs (sogenanntes Abwachsen), hierdurch gespart werden.

Das Aufwickeln der Hohlfadenmatten kann - wie oben bereits ausgeführt - auf einen Kern erfolgen, der im Hohlfadenwickelkörper verbleibt. Es ist jedoch auch möglich, einen Kern zu verwenden, der nach dem Aufwickeln der Hohlfadenmatten zu einem Hohlfadenwickelkörper wieder entfernt wird.

Bei der Verwendung von Hohlfadenmatten, deren Hohlfäden einen Winkel mit der Drehachse des Hohlfadenwickelkörpers bilden, kann der Anfang und/oder das Ende der Hohlfadenmatten parallel zur Drehachse abgeschnitten und können die dabei entstehenden offenen Hohlfäden anschließend oder gleichzeitig verschlossen werden, beispielsweise durch sogenanntes Abschweißen, bei welchem Schneiden und Verschließen der Hohlfadenenden in einem Arbeitsgang erfolgt. Hierdurch wird erreicht, daß der Anfang und/oder das Ende dieser Hohlfadenmatten parallel zur Wickelachse verläuft und nicht zipfelförmig ausgebildet ist. Dies kann für die Handhabung der Hohlfadenmatten beim Aufwikkeln zu einem Hohlfadenwickelkörper, aber auch beim Abwickeln von einem Hohlfadenwickelkörper von großem Vorteil sein und die Handhabung erleichtern. Das Abwickeln erfolgt beispielsweise dann, wenn aus einem größeren Hohlfadenwickelkörper mehrere kleinere Hohlfadenwickelkörper oder andere Hohlfadengebilde hergestellt werden.

Einen großen Vorteil bedeutet es darlberhinaus, wenn für den Kern des Hohlfadenwickelkörpers derselbe Werkstoff wie für die Einbettmasse verwendet wird, beispielsweise Polyurethan, WeichPVC u.dgl. Dies nämlich erleichtert das stirnseitige Abschneiden oder andersartige Abtragen eines Teils der Vergußmasse zum Zwecke des Freilegens und Öffnens der Hohlfadenenden.

Die Hohlfäden des Hohlfädenwickelkörpers können auch U-förmig ausgebildet und die Hohlfadenenden demzufolge einseitig eingebettet sein. Ein solcher Hohlfadenwickelkörper kann bei Verwendung entsprechender Hohlfäden beispielsweise als Dead-End-Filter eingesetzt werden. Es ist aber auch hierbei möglich, jedes der beiden Enden der Hohlfäden in getrennte Kammern münden zu lassen und somit ein Durchströmen der Hohlfäden von einem Hohlfadenende zum anderen zu ermöglichen.

Bei Verwendung von Vollfäden - wie oben bereits ausführlich beschrieben - können diese zusätzlich zu den Hohlfäden oder aber auch anstelle einzelner Hohlfäden eingebracht werden und können auch in die Hohlfadenmatten integriert werden.

## Patentansprüche

1. Mehrlagiger Hohlfadenwickelkörper, bei welchem zumindest ein Teil der Hohlfäden wendelförmig und/oder ein Teil der Hohlfäden spiralförmig aufgewickelt ist, die Hohlfäden innerhalb jeder Hohlfadenlage über ihre gesamte Länge in einem gegenseitigen seitlichen Abstand angeordnet sind, die Hohlfäden benachbarter aufeinanderfolgender Hohlfadenlagen sich kreuzen, die Hohlfäden in Form von wenigstens zwei übereinandergelegten und dann spiralförmig aufgewickelten Hohlfadenmatten angeordnet sind, die Hohlfäden innerhalb jeder Hohlfadenmatte von mehreren, durch ein Web- oder Wirkverfahren eingebrachten Querfäden gehalten werden, wobei innerhalb jeder Hohlfadenmatte der gegenseitige Abstand der Querfäden größer ist als der gegenseitige Abstand der Hohlfäden, keiner der Hohlfäden eine Umlenksteile aufweist, und das Verhältnis von gegenseitigem Abstand benachbarter Querfäden innerhalb jeder Hohlfadenmatte zu gegenseitigem Abstand benachbarter Hohlfäden innerhalb jeder Hohlfadenmatte im Bereich von 2 bis 40 liegt.

2. Hohlfadenwickelkörper nach Anspruch 1, dadurch gekennzeichnet, daß alle Hohlfäden wendelförmig ausgebildet sind.

3. Hohlfadenwickolkörper nach Anspruch 1 oder 2, dadurch gekennzeichnet, daß die Hohlfäden wenigstens einer Hohlfadenmatte zu den übrigen Hohlfäden gegensinnig wendelförmig ausgebildet sind.

4. Hohlfadenwickolkörper nach einem der Ansprüche 1 bis 3, dadurch gekennzeichnet, daß die Hohlfäden und/oder die Querfäden strukturiert und/oder profiliert sind.

5. Hohlfadenwickelkörper nach einem der Ansprüche 1 bis 4, dadurch gekennzeichnet, daß die Hohlfäden wenigstens einer Hohlfadenmatte in Gruppen angeordnet sind, wobei mindestens in ausgewählten Bereichen der Abstand der Hohlfäden voneinander innerhalb einer Gruppe kleiner ist als der Abstand der äußeren Hohlfäden benachbarter Hohlfadengruppen voneinander.

6. Hohlfadenwickelkörper nach einem der Ansprüche 1 bis 5, dadurch gekennzeichnet, daß an Stelle eines Teils der Hohlfäden Vollfäden angeordnet sind.

7. Hohlfadenwickelkörper nach einem der Ansprüche 1 bis 6, dadurch gekennzeichnet, daß die Hohlfäden der unterschiedlichen Hohlfadenmatten unterschiedliche Eigenschatten und/oder Funktionen haben.

8. Hohlfadenwickelkörper nach einem der Ansprüche 1 bis 7, dadurch gekennzeichnet, daß die Hohlfäden der unterschiedlichen Hohlfadenmatten hinsichtlich ihres inneren Umfanges und/oder ihres äußeren Umfanges und/oder ihrer Wandstärke und/oder ihrer Länge unterschiedliche Abmessungen aufweisen.

9. Hohlfadenwickelkörper nach einem der Ansprüche 1 bis 8, dadurch gekennzeichnet, daß die Hohlfäden der unterschiedlichen Hohlfadenmatten eine unterschiedliche Querschnittsform aufweisen.

10. Hohlfadenwickelkörper nach einem der Ansprüche 1 bis 9 dadurch gekennzeichnet, daß die Hohlfäden wenigstens einer Hohlfadenmatte wenigstens an einem Ende der Hohlfadenmatte verschlossen sind.

11. Hohlfadenwickelkörper nach einem der Ansprüche 1 bis 10, dadurch gekennzeichnet, daß zwischen wenigstens einem Teil der Hohlfadenlagen ein fluiddurchlässiges Flächengebilde angeordnet ist.

12. Verfahren zum Herstellen des mehrlagigen Hohlfadenwickelkörpers nach einem der Ansprüche 1 bis 11, dadurch gekennzeichnet, daß wenigstens zwei Übereinandergelegte Hohlfadenmatten, bei denen die Hohtfäden innerhalb jeder Hohlfadenmatte über ihre gesamte Länge in einem gegenseitigen seitlichen Abstand angeordnet sind und von mehreren durch ein Web- oder Wirkverfahren eingebrachten Querfäden gehalten werden, innerhalb jeder Hohlfadenmatte der gegenseitige Abstand der Querfäden größer ist als der gegenseitige Abstand der Hohlfäden, wobei das Verhältnis von gegenseitigem Abstand benachbarter Querfäden innerhalb jeder Hohlfadenmatte zu gegenseitigem Abstand benachbarter Hohlfäden innerhalb jeder Hohlfadenmatte im Bereich von 2 bis 40 liegt, und keiner der Hohlfäden eine Umlenkstelle aufweist, um eine Drehachse spiralförmig aufgewickelt werden, wobei die Hohlfäden benachbarter Hohlfadenmatten spätestens unmittelbar vor dem Aufwickeln in eine sich überkreuzende Anordnung und zur Erzielung wendelförmig aufgewickelter Hohlfäden in Bezug auf die Drehachse des Hohlfadenwickelkörpers in eine Schräglage gebracht werden, so daß sie mit der Drehachse einen Winkel bilden.

13. Verfahren nach Anspruch 12, dadurch gekennzeichnet, daß wenigstens eine Hohlfadenmatte verwendet wird, bei welcher die Hohlfäden mit der Drehachse des Hohlfadenwickelkörpers einen Winkel von im wesentlichen 90° bilden.

14. Verfahren nach einem der Ansprüche 12 oder 13, dadurch gekennzeichnet, daß Hohlfadenmatten mit unterschiedlichen Hohlfäden verwendet werden.

15. Verfahren nach einem der Ansprüche 12 bis 14, dadurch gekennzeichnet, daß wenigstens eine Hohlfadenmatte verwendet wird, bei welcher die Längsachse der Hohlfäden zunächst im wesentlichen senkrecht zur Transportrichtung der Hohlfadenmatte und parallel zur Drehachse des Hohlfadenwickelköpers angeordnet sind, und daß eine Seite dieser wenigstens einen Hohlfadenmatte vor dem Aufwickeln über einen längeren Transportweg geführt wird als die andere Seite dieser wenigstens einen Hohlfadenmatte, so daß die Hohlfäden dieser wenigstens einen Hohlfadenmatte beim Aufwikkeln einen Winkel mit der Drehachse des Hohlfadenwickelkörpers bilden.

16. Verfahren nach einem der Ansprüche 12 bis 15, dadurch gekennzeichnet, daß zusammen mit den Hohlfadenmatten wenigstens ein fluiddurchlässiges Flächengebilde aufgewickelt wird.

17. Verfahren nach einem der Ansprüche 12 bis 16, dadurch gekennzeichnet, daß wenigstens eine Hohlfadenmatte verwendet wird, bei welcher die Hohlfäden und/oder die Querfäden strukturiert und/oder profiliert sind.

18. Verfahren nach einem der Ansprüche 12 bis 17, dadurch gekennzeichnet, daß wenigstens eine Hohlfadenmatte verwendet wird, bei der an Stelle eines Teils der Hohlfäden Vollfäden angeordnet sind.

19. Verfahren nach einem der Ansprüche 12 bis 18, dadurch gekennzeichnet, daß wenigstens eine Hohlfadenmatte verwendet wird, bei welcher die Hohlfäden in Gruppen angeordnet sind, wobei mindestens in ausgewählten Bereichen der Abstand der Hohlfäden voneinander innerhalb einer Gruppe kleiner ist als der Abstand der äußeren Hohlfäden benachbarter Hohlfadengruppen.

20. Verfahren nach einem der Ansprüche 12 bis 19, dadurch gekennzeichnet, daß wenigstens eine Hohlfadenmatte verwendet wird, bei der die Hohlfäden an wenigstens einem Ende verschlossen sind.

21. Verwendung des Hohlfadenwickelkörpers nach einem der Ansprüche 6 bis 11 zur Wärmeübertragung.

22. Verwendung des Hohlfadenwickelkörpers nach einem der Ansprüche 6 bis 11 zum Stoffaustausch.

23. Verwendung des Hohlfadenwickelkörpers nach einem der Ansprüche 6 bis 11 zur Stoffübertragung.

24. Verwendung des Hohlfadenwickelkörpers nach einem der Ansprüche 6 bis 11 zur Stofftrennung.

25. Verwendung des Hohlfadenwickelkörpers nach einem der Ansprüche 6 bis 11 zur Dialyse, insbesondere zur Blutdialyse.

26. Verwendung des Hohlfadenwickelkörpers nach einem der Ansprüche 6 bis 11 zur Oxygenation, insbesondere zur Blutoxygenation.

## Claims

1. A multi-layer hollow filament wound body, in which at least part of the hollow filaments is wound helically and/or at least part of the hollow filaments is wound spirally, the hollow filaments within each hollow filament layer are arranged at a reciprocal lateral distance over their entire length, the hollow filaments of adjacent successive hollow filament layers cross over one another, the hollow filaments are arranged in the form of at least two superimposed and then spirally wound hollow filament mats, the hollow filaments within each hollow filament mat are secured by a plurality of transverse filaments applied in a weaving or knitting process, the spacing between the transverse filaments within each hollow filament mat being greater than the spacing between the hollow filaments, none of the hollow filaments has a reversing point and the ratio of the spacing between adjacent transverse filaments within each hollow filament mat to the spacing between adjacent hollow filaments within each hollow filament mat is in the region of 2 to 40.

2. A hollow filament wound body according to claim 1, characterised in that all hollow filaments are helically arranged.

3. A hollow filament wound body according to claim 1 or 2, characterised in that the hollow filaments of at least one hollow filament mat are helically arranged in the opposite direction to the remaining hollow filaments.

4. A hollow filament wound body according to one of claims 1 to 3, characterised in that the hollow filaments and/or the transverse filaments are structured and/or profiled.

5. A hollow filament wound body according to one of claims 1 to 4, characterised in that the hollow filaments of at least one hollow filament mat are arranged in groups, the spacing between the hollow filaments within one group being smaller at least in selected areas than the spacing between the outer hollow filaments of adjacent hollow filament groups.

6. A hollow filament wound body according to one of claims 1 to 5, characterised in that solid filaments are arranged in place of one part of the hollow filaments.

7. A hollow filament wound body according to one of claims 1 to 6, characterised in that the hollow filaments of the different hollow filament mats have different properties and/or functions.

8. A hollow filament wound body according to one of claims 1 to 7, characterised in that the hollow filaments of the different hollow filament mats have different dimensions in respect of their inner circumference and/or their outer circumference and/or their wall thickness and/or their length.

9. A hollow filament wound body according to one of claims 1 to 8, characterised in that the hollow filaments of different hollow fibre mats have a different cross-sectional shape.

10. A hollow filament wound body according to one of claims 1 to 9, characterised in that the hollow filaments of one hollow filament mat are sealed at least at one end of the hollow filament mat.

11. A hollow filament wound body according to one of claims 1 to 10, characterised in that a fluid-permeable flat-shaped article is arranged between at least one part of the hollow filament layers.

12. A method for manufacturing the multi-layer hollow filament wound body according to one of claims 1 to 11, characterised in that at least two superimposed hollow filament mats, in which the hollow filaments within each hollow filament mat are arranged at a reciprocal lateral distance over their entire length and are secured by a plurality of transverse filaments applied in a weaving or knitting process, within each hollow filament mat the spacing between the transverse filaments or the like is greater than the spacing between the hollow filaments, the ratio of the spacing between adjacent transverse filaments within each hollow filament mat to the spacing between adjacent hollow filaments within each hollow filament mat being in the region of 2 to 40, and none of the hollow filaments having a reversing point, are wound spirally about an axis of rotation, the hollow filaments of adjacent hollow filament mats being laid in a crossed arrangement at the latest immediately prior to winding and in order to obtain helically arranged hollow filaments being brought into an inclined position in relation to the axis of rotation of the hollow filament wound body, so that they form an angle with the axis of rotation.

13. A method according to claim 12, characterised in that at least one hollow filament mat is used, in which the hollow filaments form an angle of approximately 90° with the axis of rotation of the hollow filament wound body.

14. A method according to one of claims 12 or 13, characterized in that hollow filament mats with different hollow filaments are used.

15. A method according to one of claims 12 to 14, characterized in that at least one hollow filament mat is used, in which the longitudinal axis of the hollow filaments is firstly arranged substantially perpendicular to the direction of transportation of the hollow filament mats and parallel to the axis of rotation of the hollow filament wound body, and one side of the said at least one hollow filament mat is guided prior to winding over a longer transportation path than the other side of the said at least one hollow filament mat, so that the hollow filaments of the said at least one hollow filament mat form an angle with the axis of rotation of the hollow filament wound body during winding.

16. A method according to one of claims 12 to 15, characterized in that at least one fluid-permeable flat-shaped article is wound together with the hollow filament mats.

17. A method according to one of claims 12 to 16,
characterized in that at least one hollow filament mat is used, in which the hollow filaments and/or the transverse filaments are structured and/or profiled.

18. A method according to one of claims 12 to 17,
characterized in that at least one hollow filament mat is used, in which solid filaments are arranged in place of one part of the hollow filaments.

19. A method according to one of claims 12 to 18, characterized in that at least one hollow filament mat is used, in which the hollow filaments are arranged in groups, the spacing between the hollow filaments within one group being smaller at least in selected areas than the spacing between the outer hollow filaments of adjacent hollow filament groups.

20. A method according to one of claims 12 to 19, characterized in that at least one hollow filament mat is used, in which the hollow filaments are sealed at least at one end.

21. Use of the hollow filament wound body according to one of claims 6 to 11 for heat transfer.

22. Use of the hollow filament wound body according to one of claims 6 to 11 for mass exchange.

23. Use of the hollow filament wound body according to one of claims 6 to 11 for mass transfer.

24. Use of the hollow filament wound body according to one of claims 6 to 11 for material separation.

25. Use of the hollow filament wound body according to one of claims 6 to 11 for dialysis, more particularly blood dialysis.

26. Use of the hollow filament wound body according to one of claims 6 to 11 for oxygenation, more particularly blood oxygenation.

## Revendications

1. Bobinage à plusieurs couches de fibres creuses, dans lequel au moins une partie des fibres creuses est enroulée en hélice et/ou une partie des fibres creuses est enroulée en spirale, les fibres creuses au sein de chaque couche sont disposées sur toute leur longueur selon un intervalle latéral mutuel, les fibres creuses de couches voisines successives se croisent, les fibres creuses sont disposées en formant au moins deux mats superposés puis enroulés en spirale, les fibres creuses à l'intérieur de chaque mat sont maintenues par plusieurs fils transversaux appliqués par un processus de tissage ou maillage, l'intervalle mutuel des fils transversaux au sein de chaque mat de fibres creuses étant supérieur à l'intervalle mutuel des fibres creuses, aucune des fibres creuses ne présentant de point de changement de direction, et le rapport de l'intervalle mutuel de fils transversaux voisins au sein de chaque mat de fibres creuses à l'intervalle mutuel de fibres creuses voisines au sein de chaque mat de fibres creuses étant compris entre 2 et 40.

2. Bobinage de fibres creuses selon revendication 1, caractérisé par le fait que toutes les fibres creuses sont en configuration hélicoïdale.

3. Bobinage de fibres creuses selon revendication 1 ou 2, caractérisé par le fait que les fibres creuses d'au moins un mat sont en configuration hélicoïdale de sens opposé à celui des autres fibres creuses.

4. Bobinage de fibres creuses selon l'une des revendications 1 à 3, caractérisé par le fait que les fibres creuses et/ou les fils transversaux sont structurés et/ou profilés.

5. Bobinage de fibres creuses selon l'une des revendications 1 à 4, caractérisé par le fait que les fibres creuses d'au moins un mat de fibres creuses sont agencées en groupes, I'intervalle entre fibres creuses au sein d'un groupe étant, au moins dans des régions choisies, plus petit que l'intervalle des fibres creuses extérieures de groupes voisins de fibres creuses.

6. Bobinage de fibres creuses selon l'une des revendications 1 à 5, caractérisé par le fait que des fibres pleines sont disposées à la place d'une partie des fibres creuses.

7. Bobinage de fibres creuses selon l'une quelconque des revendications 1 à 6, caractérisé par le fait que les fibres creuses des différents mats de fibres creuses ont des propriétés et/ou des fonctions différentes.

8. Bobinage de fibres creuses selon l'une des revendications 1 à 7, caractérisé par le fait que les fibres creuses des différents mats de fibres creuses présentent des dimensions différentes pour ce qui est de leur périmètre intérieur et/ou leur périmètre extérieur et/ou leur épaisseur de paroi et/ou leur longueur.

9. Bobinage de fibres creuses selon l'une des revendications 1 à 8, caractérisé par le fait que les fibres creuses des différents mats présentent une forme de section droite différente.

10. Bobinage de fibres creuses selon l'une quelconque des revendications 1 à 9, caractérisé par le fait que les fibres creuses d'au moins un mat de fibres creuses sont fermées au moins à une extrémité du mat de fibres creuses.

11. Bobinage de fibres creuses selon l'une des revendications 1 à 10, caractérisé par le fait qu'une structure en forme de nappe perméable au fluide est disposée entre au moins une partie des couches de fibres creuses.

12. Procédé de fabrication du bobinage de fibres creuses selon l'une des revendications 1 à 11, caractérisé par le fait qu'au moins deux mats de fibres creuses superposés sont enroulés en spirale autour d'un axe de rotation, mats dont les fibres creuses, à l'intérieur de chaque mat, sont disposées, sur toute leur longueur, selon un intervalle latéral mutuel et sont maintenues par plusieurs fils transversaux apportés par un processus de tissage ou de maillage, l'intervalle mutuel des fils transversaux au sein de chaque mat de fibres creuses étant plus grand que l'intervalle mutuel des fibres creuses, le rapport de l'intervalle mutuel de fils transversaux voisins au sein de chaque mat à l'intervalle entre fibres creuses voisines au sein de chaque mat se situant dans la plage de 2 à 40, aucune des fibres creuses ne présentant un point de changement de direction, les fibres creuses de mats voisins étant, au plus tard juste avant l'enroulement, mises en un agencement croisé et, afin d'obtenir des fibres creuses enroulées en hélice, étant mises à une position oblique par rapport à l'axe de rotation du bobinage de fibres creuses, de sorte quelles forment un angle avec l'axe de rotation.

13. Procédé selon revendication 12, caractérisé par le fait que l'on utilise au moins un mat, dans lequel des fibres creuses forment un angle valant sensiblement 90° par rapport à l'axe de rotation du bobinage de fibres creuses.

14. Procédé selon l'une des revendications 12 ou 13, caractérisé par le fait que l'on utilise des mats comportant des fibres creuses différentes.

15. Procédé selon l'une des revendications 12 à 14, caractérisé par le fait que l'on utilise au moins un mat dans lequel l'axe longitudinal des fibres creuses est d'abord agencé sensiblement perpendiculairement à la direction du transport du mat et parallèlement à l'axe de rotation du bobinage de fibres creuses, et par le fait qu'avant l'enroulement, un côté dudit mat au nombre d'au moins un est guidé sur un trajet de transport plus long que l'autre côté de ce dit mat au nombre d'au moins un, de sorte que les fibres creuses de ce mat au nombre d'au moins un forment, lors de l'enroulement, un angle avec l'axe de rotation du bobinage de fibres creuses.

16. Procédé selon l'une des revendications 12 à 15, caractérisé par le fait que l'on enroule, conjointement aux mats de fibres creuses, au moins une structure en forme de nappe perméable aux fluides.

17. Procédé selon l'une des revendications 12 à 16, caractérisé par le fait que l'on utilise au moins un mat dans lequel les fibres creuses et/ou les fils transversaux sont structurés et/ou profilés.

18. Procédé selon l'une des revendications 12 à 17, caractérisé par le fait que l'on utilise au moins un mat dans lequel des fibres pleines sont disposées à la place d'une partie des fibres creuses.

19. Procédé selon l'une des revendications 12 à 18, caractérisé par le fait que l'on utilise au moins un mat dans lequel les fibres creuses sont agencées en groupes et, au moins dans des régions choisies, l'intervalle entre fibres creuses au sein d'un groupe est plus petit que l'intervalle des fibres creuses extérieures de groupes de fibres creuses voisins.

20. Procédé selon l'une des revendications 12 à 19, caractérisé par le fait que l'on utilise au moins un mat de fibres creuses, dans lequel les fibres creuses sont fermées en au moins une extrémité.

21. Utilisation du bobinage de fibres creuses selon l'une des revendications 6 à 11, pour le transfert de chaleur.

22. Utilisation du bobinage de fibres creuses selon l'une des revendications 6 à 11, pour l'échange de matières.

23. Utilisation du bobinage de fibres creuses selon l'une des revendications 6 à 11 pour la transmission de matière(s).

24. Utilisation du bobinage de fibres creuses selon l'une des revendications 6 à 11 pour la séparation de matière(s).

25. Utilisation du bobinage de fibres creuses selon l'une des revendications 6 à 11 pour la dialyse, notamment pour l'hémodialyse.

26. Utilisation du bobinage de fibres creuses selon l'une des revendications 6 à 11, pour l'oxygénation, notamment pour l'oxygénation du sang.
